Europäisches Patentamt

European Patent Office

Office européen des brevets

(19)

(11) Veröffentlichungsnummer: **0 115 327**
**B1**

(12) **EUROPÄISCHE PATENTSCHRIFT**

(45) Veröffentlichungstag der Patentschrift: 02.05.90

(21) Anmeldenummer: 84100723.0

(22) Anmeldetag: 24.01.84

(51) Int. Cl.⁵: **H 04 L 25/49**

(54) **CMI-Decoder.**

(30) Priorität: 27.01.83 DE 3302761

(43) Veröffentlichungstag der Anmeldung:
08.08.84 Patentblatt 84/32

(45) Bekanntmachung des Hinweises auf die
Patenterteilung:
02.05.90 Patentblatt 90/18

(84) Benannte Vertragsstaaten:
AT BE CH DE FR GB IT LI NL SE

(56) Entgegenhaltungen:
FR-A-2 495 408
US-A-3 953 673

PATENT ABSTRACTS OF JAPAN, Band 6, Nr.
115 (E-115)993r, 26. Juni 1982; & JP-A-57 45763

(73) Patentinhaber: Siemens Aktiengesellschaft
Wittelsbacherplatz 2
D-8000 München 2 (DE)

(72) Erfinder: Pospischil, Reginhard, Dr., Dipl.-Ing.
Gabriel-von-Seidl-Strasse 15
D-8032 Lochham (DE)

Courier Press, Leamington Spa, England.

EP 0 115 327 B1

## Beschreibung

Die Erfindung betrifft einen CMI-Decoder zur Umformung von CMI-codierten Signalen in binäre Signale mit einem Verzögerungsglied und einem nachgeschaltetem Gatternetzwerk.

Der CMI-Code ist aus der Empfehlung G703 der CCITT bekannt. Dort ist er für die 140 Mbit/s Schnittstellen im hierarchischen Aufbau der digitalen Signalübertragung vorgesehen. Es handelt sich bei diesem Code um einen zweistufigen NRZ-Code, bei dem ein Nullzeichen durch die Kombination eines halbbitbreiten negativen Impulses dargestellt wird, während Einzeichen abwechselnd als vollbitbreite +1 oder −1 Zeichen erscheinen.

Ein CMI-Decoder ist bereits aus dem Service Handbuch des Maßgerätes "Error Detector" HP 3763 A Fig. A4—3 Teil 2 der Firma Hewlett-Packard bekannt. Der bekannte CMI-Decoder weist zwei eingangsseitig angeordnete Differenzverstärker auf, wobei der Ausgang des einen Differenzverstärkers direkt und der Ausgang des anderen über umschaltbare Laufzeitglieder mit einem Gatternetzwerk aus fünf OR-NOR-Gatter verbunden ist. Es ergibt sich somit ein vergleichsweise hoher Aufwand, dessen hohe Leistungsaufnahme bei ferngespeisten Anordnungen störend sein kann.

Für die Überwachung von CMI-codierten Signalen wurde bischer vorgeschlagen, den Pegel des Eingangssignales oder eines aus diesem abgeleiteten Taktsignale zu überwachen. Da der Empfangspegel von der Länge und dem Zustand der Schnittstellenleitung sowie vom binären Signalgehalt abhängig ist, ergibt sich keine eindeutige Überwachung. So hat z.B. selbst eine Unterbrechung des Außenleiters eines koaxialen Kabels wegen der Verwendung geregelter Eingangsentzerrer mit entsprechender Systemreserve meist keine für eine Überwachung geeignete Pegelabsenkung zur Folge. Dennoch führt eine solche Unterbrechung empfangsseitig zu einer Fehlentzerrung wegen der starken Verschiebung des Entzerrerarbeitspunktes, außerdem ergibt sich eine drastische Verringerung des Signal-Geräuschverhältnisses, ohne daß eine Fehlermeldung auftritt.

Die Aufgabe der vorliegenden Erfindung besteht also darin, einen wenig aufwendigen CMI-Decoder der eingangs erwähnten Art zu finden, der eine leichte Überwachung der empfangenen CMI-codierten Signale ermöglicht.

Erfindungsgemäß wird die Aufgabe dadurch gelöst, daß mit dem Eingang für die CMI-codierten Signale die ersten Eingänge eines ersten UND-Gatters und eines NOR-Gatters sowie der Eingang eines ersten Verzögerungsgliedes mit einer Verzögerung von etwa einer halben Bitdauer verbunden sind, daß mit dem Ausgang des ersten Verzögerungsgliedes die zweiten Eingänge des ersten UND-Gatters und des NOR-Gatters verbunden sind, daß die Ausgänge des ersten UND-Gatters und des NOR-Gatters jeweils getrennt mit den beiden Eingängen eines ersten ODER-Gatters verbunden sind, an dessen Ausgang die erzeugten binären Signale entnehmbar sind.

Von besonderem Vorteil bei der erfindungsgemäßen Anordnung ist die Möglichkeit, diese mittels handelsüblicher Bauelemente aufzubauen.

Zweckmäßige Welterbildungen des erfindungsgemäßen CMI-Decoders sind in den Patentansprüchen 2 bis 7 beschrieben.

Die Erfindung soll im folgenden anhand der Zeichnung näher erläutert werden.

In der Zeichnung zeigt

Fig. 1 das Logikschaltbild eines erfindungsgemäßen CMI-Decoders,

Fig. 2u. 3 Impulsdiagramme zum CMI-Decoder nach Fig. 1,

Fig. 4 das Logikschaltbild eines besonders für hohe Übertragungsgeschwindigkeiten ausgebildeten CMI-Decoders nach der Erfindung.

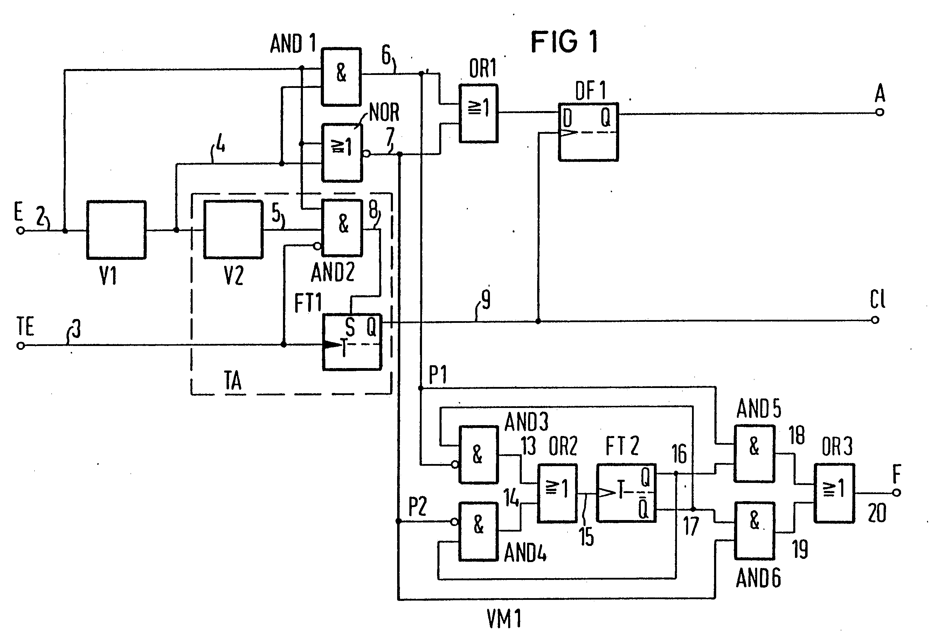

Der CMI-Decoder nach Fig. 1 enthält einen Eingang E für die CMI-codierten Signale, die beispielsweise von einem Regenerator stammen können und einen Takteingang TE, an dem das bei der Regeneration benötigte Taktsignal mit einer Frequenz entsprechend der doppelten Bitfolgefrequenz der CMI-codierten Signale ansteht. Mit dem Eingang E sind parallel der Eingang eines ersten Verzögerungsgliedes V1 mit einer Verzögerung von etwa einer halben Bitdauer und jeweils ein Eingang eines ersten UND-Gatters AND1 und eines NOR-Gatters NOR verbunden. Der Ausgang des ersten Verzögerungsgliedes V1 ist mit den zweiten Eingängen des ersten UND-Gatters AND1 und des NOR-Gatters NOR verbunden.

Die Ausgänge dieser beiden Gatter sind jeweils getrennt mit Eingängen eines ersten ODER-Gatters OR 1 verbunden, an dessen Ausgang die erzeugten binären Signale entnehmbar sind. Die erzeugten binären Signale weisen dabei unterschiedliche Längen auf, neben vollbitbreiten Impulsen treten auch halbbitbreite Impulse auf. Aus diesem Grund ist mit dem Ausgang des ersten ODER-Gatters OR1 der D-Eingang eines ersten D-Flipflop DF1 verbunden, das mit dem Bittakt der CMI-codierten bzw. der binären Signale getaktet ist. Am nichtinvertierenden Ausgang Q dieses D-Flipflop sind die binären Signale in jedem Fall als vollbitbreite Impulse entnehmbar, so daß der Q-Ausgang dieses Flipflops direkt mit dem Ausgng A des CMI-Decoders verbunden ist.

Zur Erzeugung des Bittaktes für das erste D-Flipflop DF1 ist eine Anordnung TA zur Taktableitung vorgesehen, die ein zweites Verzögerungsglied V2 enthält, dessen Verzögerung ebenfalls einer halben Bitdauer der CMI-codierten bzw. der binären Signale entspricht. Mit dem Ausgang des zweiten Verzögerungsgliedes ist ein nichtinvertierender Eingang eines zweiten UND-Gatters AND2 verbunden, dessen weiterer nichtinvertierender Eingang an den Eingang E des CMI-Decoders angeschlossen ist. Mit dem Eingang TE für das Taktsignal mit der gekoppelten Bitfolgefrequenz ist ein invertierender Eingang des zweiten UND-Gatters AND2 und ein Takteingang einer ersten Frequenzteilerstufe FT1 verbunden. Der Setzeingang S der ersten Frequenzteilerstufe FT1 ist an den Ausgang des zweiten UND-Gatters AND2 angeschlossen, während der nichtinvertierende Ausgang Q der ersten Frequenzteilerstufe das gewünschte Taktsignal C1 abgibt.

Mit den Ausgängen des ersten UND-Gatters AND1 und des NOR-Gatters NOR sind der erste und der zweite Eingang P1, P2, eines Coderegelverletzungsprüfers VM1 verbunden. Mit dem ersten Eingang P1 ist ein invertierender Eingang eines dritten UND-Gatters AND3 und ein nichtinvertierender Eingang eines fünften UND-Gatters AND5 verbunden, während an den zweiten Eingang P2 der invertierende Eingang eines vierten UND-Gatters AND4 und der nichtinvertierende Eingang eines sechsten UND-Gatters AND6 angeschlossen sind. Die Ausgänge der beiden UND-Gatter AND3, AND4 sind jeweils getrennt mit Eingängen eines zweiten ODER-Gatters OR2 verbunden, an dessen Ausgang der Takteingang einer zweiten Frequenzteilerstufe FT2 angeschlossen ist. Mit dem nichtinvertierenden Ausgang Q der zweiten Frequenzteilerstufe FT2 sind weitere nichtinvertierende Eingänge des vierten UND-Gatters AND4 und des fünften UND-Gatters AND5 verbunden, während an den invertierenden Ausgang Q̄ der zweiten Frequenzteilerstufe FT2 nichtinvertierende Eingänge des dritten UND-Gatters AND3 und des sechsten UND-Gatters AND6 angeschlossen sind. Die Ausgänge des fünften und des sechsten UND-Gatters AND5, AND6 sind jeweils getrennt mit Eingängen eines dritten ODER-Gatters OR3 verbunden, an dessen Ausgang F bei Coderegelverletzungen im empfangenen CMI-codierten Signal Fehlerimpulse auftreten.

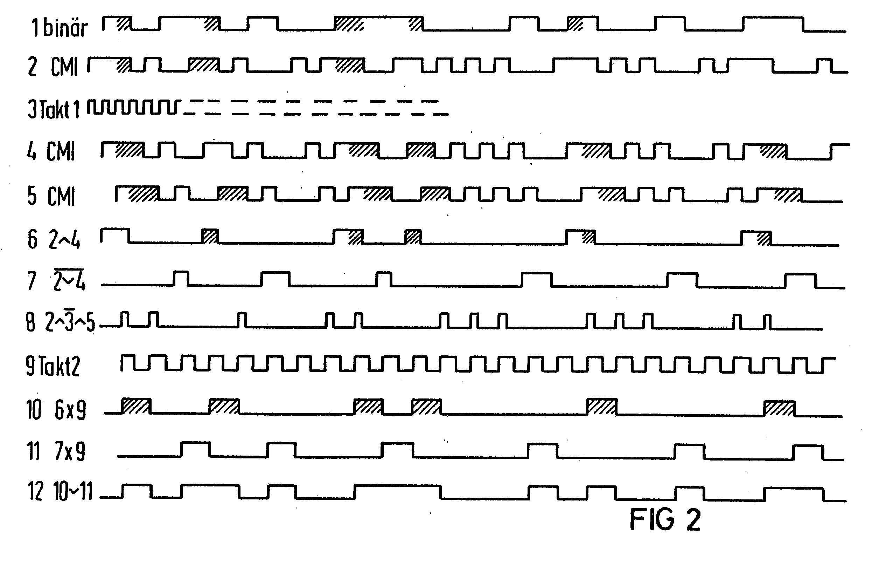

Zur Erläuterung der Wirkungsweise des CMI-Decoders nach der Fig. 1 mit der Anordnung TA zur Taktableitung und dem Coderegelverletzungsprüfer VM1 wird das Impulsdiagramm nach der Fig. 2 herangezogen.

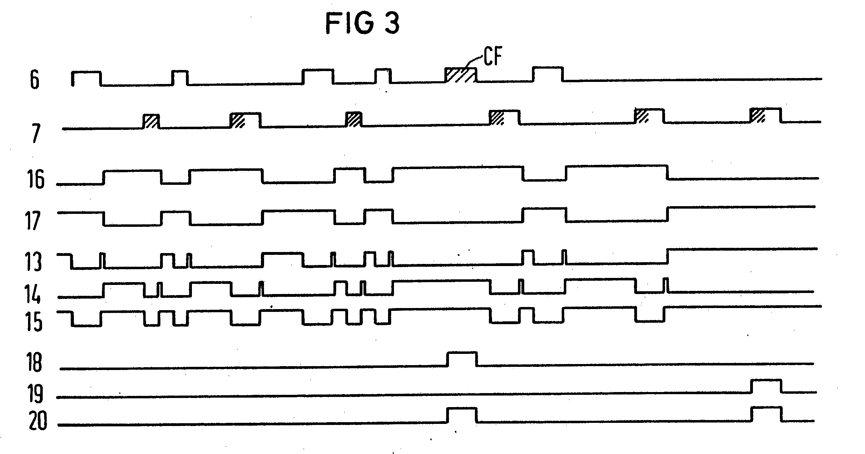

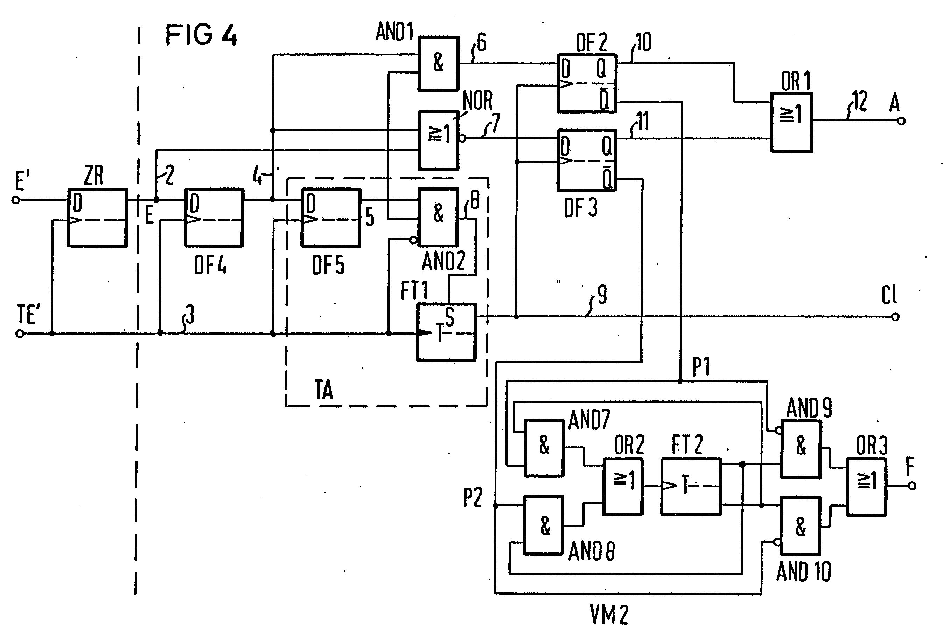

In der obersten Zeile des Impulsdiagramms ist das binäre Ausgangssignal dargestellt, das in Form eines CMI-codierten Signals Übertragen wird und am Eingang E in der Form ansteht, die in Zeile 2 dargestellt ist. Die in den Figuren 1 und 4 enthaltenen. Ziffern geben jeweils die Zeile im Impulsdiagramm nach den Fig. 2 u, 3 an, in der das betreffende Signal dargestellt ist. In der Zeile 3 des Impulsdiagramms ist das am Eingang TE anstehende erste Taktsignal dargestellt, wobei dieses für die Regeneration der CMI-codierten Signale verwendete Taktsignal die doppelte Bitfolgefrequenz der CMI-codierten Signale aufweist. Es ist erkennbar, daß das am Eingang anstehende CMI-Signal am Ausgang des ersten Verzögerungsgliedes V1 entsprechend Zeile 4 um eine halbe Bitperiode und am Ausgang des zweiten Verzögerungsgliedes V2 um eine weitere halbe Bitperiode verzögert sind. Aus der Verknüpfung des Eingangssignals mit dem um eine halbe Bitperiode verzögertem Signal ergibt sich am Ausgang des ersten UND-Gatters das Signal 6 und am Ausgang des NOR-Gatters das Signal 7. Während des Signal 6 positive Impulse nur für die binären 1-Impulse enthält, die im CMI-codierten Signal mit positiver Polarität übertragen wurden, enthält des Signal 7 positive Impulse nur für diejenigen binären 1-Impulse, die im CMI-Code mit der Polarität 0 Übertragen wurden. Entsprechend der CMI-Coderegel wechseln sich die Impulse der Signale 6 und 7 bei störungsfreier Übertragung ab, dabei dauern diese Signale jeweils eine halbe oder eine ganze Bitperiode. Eine Verletzung der CMI-Coderegel würde also bedeuten, daß zwischen zwei aufeinanderfolgenden 1-Impulsen an den Ausgängen des ersten UND-Gatters AND1 oder des NOR-Gatters NOR kein Impuls am jeweils anderen Ausgang erscheint. Zur Erläuterung der Funktion des ersten Coderegelverletzungsprüfers VM1 wird die Fig. 3 herangezogen.

Die Impulse der Zeilen 6 und 7 erscheinen auch an den Eingängen P1 und P2 des Coderegelverletzungsprüfers VM1 und damit an den invertierenden Eingängen des dritten und des vierten im Coderegelverletzungsprüfer VM1 eingangsseitig angeordneten UND-Gatters. Bei Auftreten von Impulses werden also diese UND-Gatter gesperrt, vgl. Zeilen 13 und 14, und die im Coderegelverletzungsprüfer VM1 enthaltenen fünften und sechsten UND-Gatter AND5, AND6, entsprechend Zeilen 18 und 19 geöffnet. Ein Abweichen von dem abwechselnden Auftreten von Impulsen durch den Codefehlerimpuls CF in den Zeilen 6 oder 7 des Impulsdiagramms nach Fig. 3 führt nun dazu, daß die zweite Frequenzteilerstufe FT2 in Form eines weiteren J-K-Flipflops entsprechend Zeile 15 nicht umgesssschaltet wird und damit an den Eingängen des fünften oder des sechsten UND-Gatters zwei 1-Impulse anliegen, die über einen 1-Impuls an einem der Eingänge des dritten ODER-Gatters entsprechend Zeilen 18 oder 19 zu einem Fehlerimpuls am Ausgang F entsprechend Zeile 20 mit einer Dauer entsprechend den Impulsen der Signale der Zeilen 6 oder 7 führen.

Die Erzeugung des Bittaktes CI entsprechend Zeile 9 geschieht mittels der ersten Frequenzteilerstufe FT1, die in Form eines J-K-Flipflops realisiert ist. Zur Vermeidung einer Phasenunsicherheit von 180 Grad muß dabei die erste Frequenzteilerstufe mit dem Ausgangssignal des zweiten UND-Gatters AND2 gesetzt werden. Das in Zeile 8 dargestellte Ausgangssignal des zweiten UND-Gatters ist durch UND-Verknpüfung des um eine Bitdauer verzögerten CMI-codierten Eingangssignals 2 mit dem inversen Taktsignal mit erhöhtem Bitfolgefrequenz und mit dem unverzögerten Eingangssignal entsprechend Zeile 2 erzeugt worden. Für die Weiterverarbeitung der am Fahlerausgang F des Coderegelverletzungsprüfers auftretenden Fehlerimpulse kann es störend sein, daß diese Impulse eine Dauer entsprechend einer halben oder einer ganzen Bitdauer aufweisen können. Es ist dann zweckmäßig, dem Fehlerimpulsausgang F eine weitere mit dem Takt entsprechend Zeile 9 gesteuerte D-Kippstufe nachzuschalten.

In der Fig. 4 ist ein CMI-Decoder mit einer Taktableitung TA und einem veränderten Coderegelverletzungsprüfer VM2 dargestellt, der besonders für hohe Übertragungsgeschwindigkeiten zweckmäßig ist. Dem Eingang E des CMI-Decoders vorgeschaltet ist ein Zeitregenerator ZR in Form eines getakteten D-Flipflops, durch das die exakte Zeitlage der CMI-Impulse wiederhergestellt wird. Für eine sichere Fehlererkennung bei hohen Übertragungsgeschwindigkeiten hat es sich als zweckmäßig erwiesen, die Ausgangssignale des ersten UND-Gatters AND1 und des NOR Gliedes NOR entsprechend Zeilen 6 und 7 in vollbitbreite Impulse umzuwandeln. Zu diesem Zweck sind mit dem Ausgang des ersten UND-Gatters AND1 der D-Eingang eines zweiten getakteten D-Flipflops DF2 und mit dem Ausgang des NOR-Gliedes der D-Eingang eines dritten mit dem Bittakt getakteten D-Flipflops DF3 verbunden. Die an den nichtinvertierenden Q-Ausgängen dieser Flipflops anstehenden Impulse entsprechend Zeile 10 und 11 werden dann im nachgeschalteten ersten ODER-Glied 1 miteinander zum Ausgangssignal entsprechend Zeile 12 kombiniert.

Da bei der Verwendung von D-Flipflops auch inverse Ausgangssignale erzeugt werden, können bei entsprechender Verbindung anstelle des dritten und des vierten UND-Gliedes mit je einem inversen Eingang auch ein siebtes und ein achtes UND-Glied mit zwei nichtinvertierenden Eingängen Verwendung finden. In diesem Fall sind auch das fünfte und das sechste UND-Gatter AND5, AND6 durch ein neuntes und ein zehntes UND-Gatter AND9, AND10 mit je einem invertierendem und einem nichtinvertierenden Eingang zu ersetzen.

Es kann auch der Coderegelverletzungsprüfer VM1 nach der Fig. 1 Verwendung finden, dessen Eingängs P1 und P2 sind dann mit den Q-Ausgängen des zweiten und des dritten D-Flipflops DF2, DF3 zu verbinden.

Im Hinblick auf einen leichten Aufbau in integrierter Technik sind das erste und das zweite Verzögerungsglied V1, V2 des CMI-Decoders nach der Fig. 1 in der Fig. 4 mittels des vierten und des fünften D-Flipflops DF4, DF5 realisiert.

**Patentansprüche**

1. CMI-Decoder zur Umformung von CMI-codierten Signalen in binäre Signale mit einem Verzögerungsglied und einem nachgeschaltetem Gatternetzwerk, dadurch gekennzeichnet, daß mit dem Eingang (E) für die CMI-codieren Signale die ersten Eingänge eines ersten UND-Gatters (AND1) und eines NOR-Gatters (NOR) sowie der Eingang eines ersten Verzögerungsgliedes (V1) mit einer Verzögerung von etwa einer halben Bitdauer verbunden sind, daß mit dem Ausgang des ersten Verzögerungsgliedes (V1) die zweiten Eingänge des ersten UND-Gatters (AND1) und des NOR-Gatters (NOR) verbunden sind, daß die Ausgänge des ersten UND-Gatters (AND1) und des NOR-Gatters (NOR) jeweils getrennt mit den beiden Eingängen eines ersten ODER-Gatters (OR1) verbunden sind an dessen Ausgang die erzeugten binären Signale entnehmbar sind.

2. CMI-Decoder nach Anspruch 1, dadurch gekennzeichnet, daß zur Erzeugung vollbitbrieter binärer Signale mit dem Ausgang des ersten ODER-Gliedes (OR1) der D-Eingang eines ersten getakteten D-Flipflops (DF1) verbunden ist und daß der Q-Ausgang des ersten D-Flipflops (DF1) den Ausgang (A) des CMI-Decoders darstellt.

3. CMI-Decoder nach Anspruch 2, dadurch gekennzeichnet, daß zur Erzeugung des Taktsignals für das erste D-Flipflop DF1 aus dem bei der Regeneration für die CMI-codierten Signale verwendeten Taktsignal doppelter Bitfrequenz ein zweites Verzögerungsglied (V2) mit einer Verzögerung entsprechend einer halben Bitdauer vorgesehen ist, dessen Eingang mit dem Ausgang des ersten Verzögerungsgliedes (V1) verbunden ist, daß der Ausgang des zweiten Verzögerungsgliedes (V2) mit dem einen Eingang eines zweiten UND-Gliedes (AND2) verbunden ist, daß ein weiterer Eingang des zweiten UND-Gatters (AND2) mit dem Eingang (E) für die CMI-codierten Signale verbunden ist, daß mit dem Takteingang (TE) für den Regenerationstakt der Takteingang einer ersten Frequenzteilerstufe (FT1) und ein invertierender Eingang des zweiten UND-Gatters (AND2) verbunden sind, daß der Ausgang des zweiten UND-Gatters mit dem Setzeingang der ersten Frequenzteilerstufe (FT1) verbunden ist und daß der Q-Ausgang der ersten Frequenzteilerstufe mit dem Takteingang des ersten D-Flipflops (DF1) verbunden ist.

4. CMI-Decoder nach Patentansprüchen 2 oder 3, dadurch gekennzeichnet, daß mit dem Ausgang des ersten UND-Gatters (AND1) der D-Eingang eines zweiten getakteten D-Flipflop (DF2) verbunden ist, daß mit dem Ausgang des NOR-Gatters (NOR) der D-Eingang eines dritten getakteten D-Flipflops (DF3) verbunden ist, daß die Q-Ausgänge des zweiten und des dritten D-Flipflops (DF2, DF3) mit den Eingängen des ersten ODER-Gatters (OR1) verbunden sind und daß der Ausgang dieses ODER-Gatters den Ausgang des CMI-Decoders darstellt.

5. CMI-Decoder nach Patentansprüchen 1, 2 oder 3, dadurch gekennzeichnet, daß als erstes und als zweites Verzögerungsglied jeweils ein mit dem Regenerationstakt getaktetes D-Flipflop (DF4, DF5) vorgesehen ist.

6. CMI-Decoder nach Patentansprüchen 1 oder 2, dadurch gekennzeichnet, daß zur Überwachung der CMI-codierten Signale ein Coderegelverletzungsprüfer (VM1) vorgesehen ist, dessen erster Eingang (P1) mit dem Ausgang des ersten UND-Gatters (AND1) und dessen zweiter Eingang (P2) mit dem Ausgang des NOR-Gatters (NOR) verbunden sind, daß mit dem ersten Eingang (P1) der invertierende Eingang eines dritten UND-Gitters (AND3) und der nichtinvertierende Eingang eines fünften UND-Gatters (AND5) verbunden sind, daß mit den zweiten Eingang (P2) des Coderegelverletzungsprüfers der invertierende Eingang eines vierten UND-Gatters (AND4) und der nichtinvertierende Eingang eines sechsten

EP 0 115 327 B1

UND-Gatters (AND6) verbunden sind, daß die Ausgänge des dritten und des vierten UND-Gatters jeweils getrennt mit Eingängen eines zweiten ODER-Gatters (OR2) verbunden sind, dessen Ausgang mit dem Takteingang einer zweiten Frequenzteilerstufe (FT2) verbunden ist, daß mit dem invertierenden Ausgang $\bar{Q}$ der zweiten Frequenzteilerstufe (FT2) nichtinvertierende Eingänge des dritten UND-Gatters (AND3) und des sechsten UND-Gatters (AND6) verbunden sind, daß mit dem nichtinvertierenden Ausgang (Q) der zweiten Frequenzteilerstufe (FT2) nichtinvertierende Eingänge des vierten UND-Gatters (AND4) und des fünften UND-Gatters (AND5) verbunden sind und daß die Ausgänge des fünften und des sechsten UND-Gatters (AND5, AND6) jeweils getrennt mit Eingängen eines dritten ODER-Gatters (OR3) verbunden sind, dessen Ausgang den Ausgang (F) des Coderegelverletzungsprüfers (VM1) darstellt.

7. CMI-Decoder nach Patentansprüchen 4 und 6, dadurch gekennzeichnet, daß der erste Eingang (P1) des Coderegelverletzungsprüfers mit dem invertierenden Ausgang $\bar{Q}$ des zweiten D-Flipflops (DF2) und der zweite Eingang (P2) des Coderegelverletzungsprüfers mit dem invertierenden Ausgang ($\bar{Q}$) des dritten D-Flipflops (DF3) verbunden ist, daß anstelle des dritten und des vierten UND-Gatters (AND3, AND4) ein siebtes und ein achtes UND-Gatter (AND7, AND8) mit jeweils 2 nichtinvertierenden Eingängen und anstelle des fünften und sechsten UND-Gatters ein neuntes und ein zehntes UND-Gatter mit jeweils einem invertierenden und einem nichtinvertierenden Eingang vorgesehen ist.

**Revendications**

1. Décodeur CMI servant à convertir des signaux codés selon le codage CMI en des signaux binaires et comportant un circuit à retard et un réseau de portes branché en aval, caractérisé par le fait que les premières entrées d'une première porte ET (AND1) et d'une porte NON-OU (NOR) ainsi que l'entrée d'un premier circuit à retard (V1) sont reliées, avec un retard égal à environ la moitié de la durée d'un bit, à l'entrée (E) prévue pour les signaux codés selon le code CMI, que les secondes entrées de la première porte ET (AND1) et de la porte NON-OU (NOR) sont reliées à la sortie du premier circuit à retard (V1), que les sorties de la première porte ET (AND) et de la porte NON-OU (NOR) sont reliées respectivement et séparément aux deux entrées d'une première porte OU (OR1), à la sortie de laquelle les signaux binaires produits suivant être prélevés.

2. Décodeur CMI suivant la revendication 1, caractérisé par le fait que pour la production de signaux binaires possédant la largeur d'un bit complet, l'entrée D d'une première bascule bistable de type D commandée de façon cadencée (DF1) est reliée à la sortie du premier circuit OU (OR1) et que la sortie Q de la première bascule bistable (DF1) représente la sortie (A) du décodeur CMI.

3. Décodeur CMI suivant la revendication 2, caractérisé par le fait que pour la production du signal de cadence pour la première bascule bistable de type D (DF1) à partir du signal de cadence utilisé pour la régénération des signaux codés selon le code CMI et possédant la fréquence binaire double, il est prévu un second circuit à retard (V2) produisant un retard correspondant à la moitié de la durée d'un bit et dont l'entrée est reliée à la sortie du premier circuit à retard (V1), que la sortie du second circuit à retard (V2) est reliée à une entrée d'une seconde porte ET (AND2) et qu'une autre entrée de la seconde porte ET (AND2) est reliée à l'entrée (E) prévue pour les signaux codés selon le code CMI, que l'entrée de cadence d'un premier étage diviseur de fréquence (FT1) et une entrée inverseuse de la seconde porte ET (AND2) sont reliées à l'entrée de cadence (TE) prévue pour la cadence de régénération, que la sortie de la seconde porte ET est reliée à l'entrée de positionnement du premier étage diviseur de fréquence (FT1) et que la sortie Q du premier étage diviseur de fréquence est reliée à l'entrée de cadence de la première bascule bistable de type D (DF1).

4. Décodeur CMI suivant les revendications 2 ou 3, caractérisé par le fait que l'entrée D d'une seconde bascule bistable commandée de façon cadencée (DF2) est reliée à la sortie de la première porte ET (AND1), que l'entrée (D) d'une troisième bascule bistable de type D commandée de façon cadencée (DF3) est reliée à la sortie de la porte NON-OU (NOR), que les sorties Q des seconde et troisième bascules bistables de type D (DF2, DF3) sont reliées aux entrées de la première porte OU (OR1) et que la sortie de cette porte OU représente la sortie du décodeur CMI.

5. Décodeur CMI suivant les revendications 1, 2 ou 3, caractérisé par le fait qu'il est prévu respectivement, comme premier et second circuits à retard, des bascules bistables de type D (DF4, DF5) commandées de façon cadencé par la cadence de régénération.

6. Décodeur CMI suivant les revendications 1 ou 2, caractérisé par le fait que pour la transmission des signaux codés selon le code CMI, il est prévu un dispositif (VM1) de contrôle de dénaturation de la règle de code, dont la première entrée (P1) est raccordée à la sortie de la première porte ET (AND1) et dont la seconde entrée (P2) est raccordée à la sortie de la porte NON-OU (NOR), que l'entrée inverseuse d'une troisième porte ET (AND3) et l'entrée non inverseuse d'une cinquième porte ET (AND5) sont reliées à la première entrée (P1) du dispositif de contrôle de dénaturation de la règle de code, que l'entrée inverseuse d'une quatrième porte ET (AND4) et l'entrée non inverseuse d'une sixième porte ET (AND6) sont reliées à la seconde entrée (P2) du dispositif de contrôle de dénaturation de la règle de code, que les sorties des troisième et quatrième portes ET sont reliées, respectivement et séparément, à des entrées d'une seconde porte OU (OR2), dont la sortie est reliée à l'entrée de cadence d'un second étage diviseur de fréquence (FT2), que des entrées non inverseuses de la troisième porte FT (AND3) et de la sixième porte ET (AND6) sont reliées à la sortie inverseuse Q du second étage diviseur de fréquence (FT2), que des entrées non inverseuses de la quatrième porte FT (AND4) et de la cinquième porte ET (AND5) sont reliées à la sortie non inverseuse (Q) du second étage diviseur de fréquence (FT2) et que les sorties des cinquième et sixième portes ET (AND5, AND6) sont reliées respectivement et séparément à des entrées d'une troisième porte OU (OR3), dont la sortie représente la sortie (F) du dispositif (VM1) de contrôle de dénaturation de la règle de code.

7. Décodeur CMI suivant les revendications 4 et 6, caractérisé par le fait que la première entrée (P1) du dispositif de contrôle de dénaturation de la règle de code est reliée à la sortie inverseuse $\overline{Q}$ de la seconde bascule bistable de type D (DF2) et que la seconde entrée (P2) du disopsitif de contrôle de dénaturation de la règle de code est reliée à la sortie inverseuse ($\overline{Q}$) de la première bascule bistable de type D (DF3), que des septième et huitième portes ET (AND7, AND8) comportant chacune 2 entrées non inverseuses sont prévues à la place des troisième et quatrième portes ET (AND3, AND4) et que des neuvième et dixième portes ET comportant chacune une entrée non inverseuse sont prévues à la place des cinquième et sixième portes ET.

**Claims**

1. CMI decoder for converting CMI-coded signals into binary signals having a delay element and a subsequently added gating network, characterized in that the first inputs of a first AND gate (AND1) and of a NOR gate (NOR) and the input of a first delay element (V1) are connected to the input (E) for the CMI-coded signals with a delay of approximately one half of a bit period, in that the second inputs of the first AND gate (AND1) and of the NOR gate (NOR) are connected to the output of the first delay element (V1), in that the outputs of the first AND gate (AND1) and of the NOR gate (NOR) are connected, in each case separately, to the two inputs of a first OR gate (OR1), at the output of which the binary signals produced are available.

2. CMI decoder according to Claim 1, characterized in that, for generating binary signals of full-bit width, the D input of a first clocked D flip-flop (DF1) is connected to the output of the first OR member (OR1) and in that the Q output of the first flip-flop (DF1) represents the output (A) of the CMI decoder.

3. CMI decoder according to Claim 2, characterized in that, for generating the clock signal for the first D flip-flop DF1 from the clock signal with double-bit frequency used during regeneration for the CMI-coded signals, a second delay element (V2) with a delay corresponding to one half of a bit duration is provided, the input of which is connected to the output of the first delay element (V1), in that the output of the second delay element (V2) is connected to the one input of a second AND member (AND2), in that a further input of the second AND gate (AND2) is connected to the input (E) for the CMI-coded signals, in that the clock input of a first frequency divider stage (FT1) and an inverting input of the second AND gate (AND2) are connected to the clock input (TE) for the regeneration clock, in that the output of the second AND gate is connected to the setting input of the first frequency divider stage (FT1) and in that the Q output of the first frequency divider stage is connected to the clock input of the first D flip-flop (DF1).

4. CMI decoder according to Patent Claims 2 or 3, characterized in that the D input of a second clocked D flip-flop (DF2) is connected to the output of the first AND gate (AND1), in that the D input of a third clocked D flip-flop (DF3) is connected to the output of the NOR gate (NOR), in that the Q outputs of the second and of the third D flip-flop (DF2, DF3) are connected to the inputs of the first OR gate (OR1) and in that the output of this OR gate represents the output of the CMI decoder.

5. CMI decoder according to Patent Claims 1, 2 or 3, characterized in that, as first and as second delay element, in each case a D flip-flop (DF4, DF5) clocked with the regeneration clock is provided.

6. CMI decoder according to Patent Claims 1 or 2, characterized in that, for monitoring the CMI-coded signals, a code protocol violation monitor (VM1) is provided, the first input (P1) of which is connected to the output of the first AND gate (AND1) and the second input (P2) of which is connected to the output of the NOR gate (NOR), in that the inverting input of a third AND gate (AND3) and the non-inverting input of a fifth AND gate (AND5) are connected to the first input (P1), in that the inverting input of a fourth AND gate (AND4) and the non-inverting input of a sixth AND gate (AND6) are connected to the second input (P2) of the code protocol violation monitor, in that the outputs of the third and of the fourth AND gate are connected, in each case separately, to inputs of a second OR gate (OR2), the output of which is connected to the clock input of a second frequency divider stage (FT2), in that non-inverting inputs of the third AND gate (AND3) and of the sixth AND gate (AND6) are connected to the inverting output $\overline{Q}$ of the second frequency divider stage (FT2), in that non-inverting inputs of the fourth AND gate (AND4) and of the fifth AND gate (AND5) are connected to the non-inverting ouptut (Q) of the second frequency divider stage (FT2) and in that the outputs of the fifth and of the sixth AND gate (AND5, AND6), are connected, in each case separately, to inputs of a third OR gate (OR3), the output of which represents the output (F) of the code protocol violation monitor (VM1).

7. CMI decoder according to Patent Claims 4 and 6, characterized in that the first input (P1) of the code protocol violation monitor is connected to the inverting output $\overline{Q}$ of the second D flip-flop (DF2), and the second input (P2) of the code protocol violation monitor is connected to the

inverting output ($\overline{Q}$) of the third D flip-flop (DF3), in that, instead of the third and of the fourth AND gate (AND3, AND4), a seventh and an eighth AND gate (AND7, AND8) is provided with, in each case, two non-inverting inputs and, instead of the fifth and of the sixth AND gate, a ninth and a tenth AND gate is provided with, in each case, an inverting and a non-inverting input.

FIG 1

EP 0 115 327 B1

1 binär

2 CMI

3 Takt 1

4 CMI

5 CMI

6 2∼4

7 $\overline{2\sim4}$

8 2∼$\overline{3}$∼5

9 Takt 2

10 6x9

11 7x9

12 10∼11

FIG 2

EP 0 115 327 B1

FIG 3

FIG 4

EP 0 115 327 B1